# EUROPÄISCHE PATENTSCHRIFT

(11) **EP 1 755 909 B1**
(45) Veröffentlichungstag und Bekanntmachung des Hinweises auf die Patenterteilung: **19.03.2008**
(21) Anmeldenummer: 05749334.8
(22) Anmeldetag: 20.05.2005
(51) Int. Cl.: B60H 3/00, A61L 9/22, F24F 3/16

(54) **VORRICHTUNG ZUR DESINFEKTION DER BAUTEILE, INSBESONDERE DES VERDAMPFERS, EINER KLIMAANLAGE IN KRAFTFAHRZEUGEN**
DEVICE FOR DISINFECTING THE COMPONENTS IN PARTICULAR THE EVAPORATOR OF AN AIR-CONDITIONING UNIT IN MOTOR VEHICLES
DISPOSITIF PERMETTANT DE DESINFECTER LES COMPOSANTS, EN PARTICULIER L'EVAPORATEUR, D'UNE CLIMATISATION DE VEHICULE AUTOMOBILE

(30) Priorität: 25.05.2004 DE 102004025462
(43) Veröffentlichungstag der Anmeldung: 28.02.2007
(73) Patentinhaber: Bayerische Motoren Werke Aktiengesellschaft, 80809 München (DE)
(72) Erfinder: WIEDEMANN, Stefan, 80796 München (DE)
(86) Internationale Anmeldenummer: PCT/EP2005/005514
(87) Internationale Veröffentlichungsnummer: WO 2005/115778

(56) Entgegenhaltungen:
- DE-A1- 10 209 837
- DE-A1- 19 651 403

## Beschreibung

Die Erfindung bezieht sich auf eine Vorrichtung zur Desinfektion der Bauteile, insbesondere des Verdampfers, einer Klimaanlage in Kraftfahrzeugen nach dem Oberbegriff des Patentanspruchs 1.

Eine derartige Vorrichtung ist beispielsweise im Zusammenhang mit dem in der DE 196 51 403 A1 beschriebenen System zur Atemluftreinigung bekannt. Dieses bekannte System beschäftigt sich jedoch vorrangig mit der Reinigung der Atemluft im Fahrgastinnenraum im Fahrbetrieb eines Kraftfahrzeuges.

Problematisch dabei ist die richtige Zumessung der Ionenmenge. Ist die Ionenmenge zu klein, ist die Wirkung der Vorrichtung unzureichend. Ist die Ionenmenge zu groß, kann dies für die Insassen belästigend wirken.

Es ist daher Aufgabe der Erfindung, einerseits eine sichere Desinfektion sicherzustellen und andererseits das Wohlbefinden der Insassen nicht zu beeinträchtigen.

Diese Aufgabe wird durch die Merkmale des Patentanspruchs 1 gelöst. Vorteilhafte Weiterbildungen sind die Gegenstände der abhängigen Ansprüche.

Bei der erfindungsgemäßen Vorrichtung zur Desinfektion der Bauteile, insbesondere des Verdampfers, einer Klimaanlage in Kraftfahrzeugen mittels eines lonisators, der in einer Klimaanlage angeordnet ist und der mittels einer elektronischen Steuereinheit ansteuerbar ist, ist die Steuereinheit derart ausgestaltet, dass der lonisator zur Produktion einer vorgegebenen Ionenmenge (Sollwert der Ionenmenge) einschaltbar ist, wobei die Ionenmenge abhängig von der auf den zu desinfizierenden Bauteilen vorhandenen Kondenswassermenge vorgegeben wird. Als Sollwert der Ionenmenge kann vorzugsweise nicht nur die absolute Ionenmasse, sondern auch eine Ionenmasse pro Zeiteinheit vorgegeben werden. Denn zum Insassenschutz darf eine maximal zulässige absolute Ionenmasse gegebenenfalls nicht überschritten werden. Die Wirksamkeit der Desinfektion hängt dann von der Zeitdauer ab, in der die (begrenzte) Ionenmasse produziert wird. Unter dem Begriff vorgegebene Ionenmenge kann man also entweder die absolute Ionenmasse oder eine bestimmte Ionenmasse, die für eine bestimmte Zeit produziert werden muss, verstehen.

Der lonisator ist in der Klimaanlage möglichst in der Nähe des Verdampfers angeordnet und mittels einer elektronischen Steuereinheit, die beispielsweise im lonisator oder auch im ohnehin vorhandenen Klimasteuergerät integriert sein kann, ansteuerbar.

Um teuere Feuchtigkeitssensoren einzusparen, wird die Kondenswassermenge vorzugsweise in der Steuereinheit mittels der ihr zur Verfügung stehenden Informationen geschätzt. Die Steuereinheit erhält die erforderlichen Informationen beispielsweise mittels entsprechender Sensoren oder mittels Datenbusverbindungen zu anderen elektronischen Steuergeräten als Eingangsgrößen. Die Eingangsgrößen werden in einer entsprechenden Auswerteeinheit in der Steuereinheit verarbeitet. Ergebnis dieser Verarbeitung ist eine entsprechende Ansteuerung des lonisators. Dazu weist die Steuereinheit beispielsweise eine Endstufe zur Ansteuerung eines im lonisator enthaltenen elektrischen Aktuators auf. Ist die Steuereinheit nicht im lonisator integriert und weist der lonisator selbst eine eigene Elektronik auf, können die Informationen auch an die Elektronik des Ionisators übertragen werden, die selbst entscheidet, ob eine Einschaltbedingung zur Produktion von Ionen vorliegt.

Die zur Verfügung stehenden Informationen zur Schätzung des Kondenswassers sind beispielsweise der Zustand des Kompressors (ein/aus), die Außentemperatur und/oder die Innenraumtemperatur. Denn der Kondenswasserniederschlag wird maßgeblich von der Temperatur beeinflusst.

Vorzugsweise schätzt die Steuereinheit die Kondenswassermenge im Frischluftbetrieb der Klimaanlage abhängig von der Außentemperatur und im Umluftbetrieb der Klimaanlage abhängig von der Innentemperatur (Temperatur im Fahrgastinnenraum).

In der Steuereinheit wird die Ionenmenge auch abhängig von weiteren Betriebsparametern vorgegeben. Insbesondere liegt im Frischluftbetrieb eine größere Verdünnung der mit Ionen beaufschlagten Luft vor als im Umluftbetrieb. Die vorgegebene Ionenmenge wird daher im Frischluftbetrieb grundsätzlich höher sein als im Umluftbetrieb. Zum Insassenschutz wird berücksichtigt, wie viel von der in der Klimaanlage mit Ionen beaufschlagten Luft in den Fahrgastinnenraum transportiert wird. Dazu werden beispielsweise der Öffnungswinkel der Luftklappen zwischen Klimaanlage und Fahrgastraum und/oder die Gebläseleistung ausgewertet.

Grundsätzlich wertet die Steuereinheit beispielsweise mittels Wertetabellen oder eines Algorithmus die zur Vorgabe des Sollwertes für die Ionenmenge erforderlichen Eingangsgrößen aus und gibt eine dem Sollwert entsprechende Stellgröße an den lonisator, beispielsweise einen Hochspannungserzeuger an einer Planarelektrode, aus. An der mit Hochspannung beaufschlagten Planarelektrode wird die sie umgebende Luft ionisiert (z. B. O₂ =>O₃).

Vorzugsweise sind die Steuereinheit und der lonisator derart ausgestaltet, dass der lonisator zumindest zeitweise beheizbar ist. Diese Maßnahme kann grundsätzlich auch als eigenständige Verbesserung von lonisatoren vorgenommen werden, die von einer Steuereinheit angesteuert bzw. geregelt werden. Die Leistung bzw. die Produktion von Ionen ist abhängig von der Menge des Kondenswassers auf dem Ionisator. Daher kann eine zumindest zeitweise Beheizung des lonisators erforderlich sein, um diesen vor der Ansteuerung zur Produktion einer vorgegebenen Ionenmenge zumindest teilweise zu trocknen oder um durch Erhöhung der Temperatur des Ionisators über den Taupunkt der (feuchten) Luft die Bildung von Kondenswasser zu verhindern. Eine Beheizung auf etwa 30 °C hat sich hierbei als ausreichend herausgestellt. Zur Beheizung des lonisators ist dieser beispielsweise mit einer einfachen Widerstandsheizung versehen, die von der Steuereinheit ansteuerbar ist. Ist der lonisator beispielsweise eine mit Hochspannung beaufschlagbare Planarelektrode, weist diese Planarelektrode einen elektrischen Heizwiderstand auf. Die Beheizung kann beispielsweise nach jedem Fahrzeug- bzw. Motorstart für ca. 5 bis 10 Minuten aktiviert werden. Das notwendige Einschaltsignal erhält die Steuereinheit beispielsweise über einen Datenbus zu einem Steuergerät, das ein "Motor läuft"-Signal liefert.

Durch die Erfindung wird im wesentlichen eine wirksame Desinfektion ohne Belästigung der Fahrzeuginsassen erreicht.

## Patentansprüche

1. Vorrichtung zur Desinfektion der Bauteile, insbesondere des Verdampfers, einer Klimaanlage in Kraftfahrzeugen mittels eines lonisators, der in einer Klimaanlage angeordnet ist und der mittels einer elektronischen Steuereinheit ansteuerbar ist, **dadurch gekennzeichnet, dass** die Steuereinheit derart ausgestaltet ist, dass der Ionisator zur Produktion einer vorgegebenen Ionenmenge einschaltbar ist, wobei die Ionenmenge abhängig von der auf den zu desinfizierenden Bauteilen vorhandenen Kondenswassermenge vorgegeben wird.

2. Vorrichtung nach Patentanspruch 1, **dadurch gekennzeichnet, dass** die Kondenswassermenge in der Steuereinheit mittels der ihr zur Verfügung stehenden Informationen geschätzt wird.

3. Vorrichtung nach Patentanspruch 2, **dadurch gekennzeichnet, dass** die zur Verfügung stehenden Informationen zur Schätzung des Kondenswassers der Zustand des Kompressors (ein/aus), die Außentemperatur und/oder die Innenraumtemperatur sind.

4. Vorrichtung nach Patentanspruch 3, **dadurch gekennzeichnet, dass** die Steuereinheit im Frischluftbetrieb der Klimaanlage die Kondenswassermenge abhängig von der Außentemperatur schätzt.

5. Vorrichtung nach Patentanspruch 3 oder 4, **dadurch gekennzeichnet, dass** die Steuereinheit im Umluftbetrieb der Klimaanlage die Kondenswassermenge abhängig von der Innentemperatur schätzt.

6. Vorrichtung nach einem der vorangegangenen Patentansprüche, **dadurch gekennzeichnet, dass** die Ionenmenge auch abhängig von weiteren Betriebsparametern (Umluftmodus, Frischluftmodus, Öffnungswinkel der Frischluftklappe, Gebläseleistung) vorgegeben wird.

7. Vorrichtung nach einem der vorangegangenen Patentansprüche, **dadurch gekennzeichnet, dass** die Steuereinheit und der lonisator derart ausgestaltet sind, dass der Ionisator zumindest zeitweise beheizbar ist.

## Claims

1. A device for disinfecting components, more especially the evaporator of an air-conditioning system in motor vehicles by means of an ioniser, which is arranged in an air-conditioning system and can be activated by means of an electronic control unit, **characterised in that** the control unit is configured in such a way that the ioniser can be switched on for the production of a predetermined amount of ions, the amount of ions being predetermined as a function of the amount of condensation water present on the components to be disinfected.

2. A device according to claim 1, **characterised in that** the amount of condensation water in the control unit is estimated by means of the information available to it.

3. A device according to claim 2, **characterised in that** the information available for estimating the condensation water is the state of the compressor (on/off), the external temperature and/or the internal temperature.

4. A device according to claim 3, **characterised in that** when the air-conditioning system is operating in the fresh air mode, the control unit estimates the amount of condensation water as a function of the external temperature.

5. A device according to claim 3 or 4, **characterised in that** when the air-conditioning system is operating in the circulating air mode, the control unit estimates the amount of condensation water as a function of the internal temperature.

6. A device according to any one of the preceding claims, **characterised in that** the amount of ions is also predetermined as a function of further operating parameters (circulating air mode, fresh air mode, opening angle of the fresh air flap, fan output).

7. A device according to any one of the preceding claims, **characterised in that** the control unit and the ioniser are configured in such a way that the ioniser can be heated at least intermittently.

## Revendications

1. Dispositif de désinfection des composants, en particulier de l'évaporateur, d'une installation de climatisation dans des véhicules automobiles au moyen d'un ionisateur disposé dans une installation de climatisation et pouvant être commandé au moyen d'une unité de commande électronique,
**caractérisé en ce que**
l'unité de commande est conçue de telle sorte que l'ionisateur peut être activé pour la production d'une quantité d'ions prédéterminée, la quantité d'ions étant prédéterminée en fonction de la quantité d'eau de condensation présente sur les composants à désinfecter.

2. Dispositif selon la revendication 1,
**caractérisé en ce que**
la quantité d'eau de condensation est estimée dans l'unité de commande au moyen des informations qui y sont disponibles.

3. Dispositif selon la revendication 2,
**caractérisé en ce que**
les informations disponibles pour l'estimation de l'eau de condensation sont l'état du compresseur (activé/désactivé), la température extérieure et/ou la température de l'habitacle.

4. Dispositif selon la revendication 3,
**caractérisé en ce que**
l'unité de commande, en mode d'air frais de l'installation de climatisation, estime la quantité d'eau de condensation en fonction de la température extérieure.

5. Dispositif selon la revendication 3 ou 4,
**caractérisé en ce que**
l'unité de commande, en mode de recyclage de l'installation de climatisation, estime la quantité d'eau de condensation en fonction de la température intérieure.

6. Dispositif selon l'une des revendications précédentes,
**caractérisé en ce que**
la quantité d'ions est également prédéterminée en fonction d'autres paramètres de fonctionnement (mode d'air recyclé, mode d'air frais, angle d'ouverture du volet d'air frais, puissance du ventilateur).

7. Dispositif selon l'une des revendications précédentes,
**caractérisé en ce que**
l'unité de commande et l'ionisateur sont conçus pou pouvoir chauffer l'ionisateur au moins partiellement.
